# FASCICULE DE BREVET EUROPEEN

(11) **EP 1 846 824 B1**
(45) Date de publication et mention de la délivrance du brevet: **06.12.2017**
(21) Numéro de dépôt: 06709489.6
(22) Date de dépôt: 09.02.2006
(51) Int. Cl.: G06F 11/20

(54) **SYSTEME ET PROCEDE DE TRAITEMENTS EMBARQUES D'ESSAIS EN VOL**
BORDSYSTEM UND VERFAHREN ZUR VERARBEITUNG VON TESTFLÜGEN
TEST FLIGHT ON-BOARD PROCESSING SYSTEM AND METHOD

(30) Priorité: 11.02.2005 FR 0550409
(43) Date de publication de la demande: 24.10.2007
(73) Titulaire: AIRBUS OPERATIONS, 31060 Toulouse (FR)
(72) Inventeur: BERBIGUIER, Michel, F-31770 Colomiers (FR); DAUSSE, Jean-françois, F-31170 Tournefeuille (FR)
(74) Mandataire: Ahner, Philippe
(86) Numéro de dépôt international: PCT/FR2006/050110
(87) Numéro de publication internationale: WO 2006/085028

(56) Documents cités:
- FR-A- 2 843 209
- US-A1- 2001 008 019
- BRAJOU F ET AL: "The airbus A380 - an AFDX-based flight test computer concept" AUTOTESTCON 2004. PROCEEDINGS SAN ANTONIO, TX, USA 20-23 SEPT. 2004, PISCATAWAY, NJ, USA,IEEE, 20 septembre 2004 (2004-09-20), pages 460-463, XP010806579 ISBN: 0-7803-8449-0
- M. BERBIGUIER: "Essais en Vol A380 : TOTEM contrôle les paquets" SILOGIC ACTUALITÉS, no. 25, juin 2004 (2004-06), pages 1-2, XP002343104

## Description

### DOMAINE TECHNIQUE

La présente invention concerne un système et un procédé de traitements embarqués d'essais en vol.

### ÉTAT DE LA TECHNIQUE ANTÉRIEURE

La sécurité des avions et leur maturité à une entrée en service repose sur une campagne d'essais en vol qui s'étale sur une période de 10 à 12 mois. Ces avions sont alors instrumentés avec de nombreux capteurs et sont dotés de moyens de calcul permettant de conduire et exploiter les essais en vol.

Pour mener à bien les essais en vol des nouveaux avions, d'importants moyens sont au service des essais pour tester un avion avant le premier vol et pendant la campagne d'essais en vol: banc général d'intégration, simulateur de vol, essais structuraux de résistance et d'endurance, installations embarquées, moyens de télémesure, moyens de mesure au sol, systèmes au sol de traitement de données...

Les moyens embarqués doivent être de plus en plus fiables, puissants et modulables.

Les essais en vol consistent à étudier le comportement de l'avion et de ses systèmes, dans des configurations bien précises. L'ensemble des essais permet de confirmer les calculs du bureau d'études ou de mettre en évidence des anomalies qui conduisent à des retouches. L'exploitation de ces essais sert à démontrer aux instances de certification de l'aviation civile que l'avion est apte à recevoir le certificat de navigabilité. Pour ce faire, l'ingénieur navigant d'essais (INE) dispose d'un programme d'essais préétabli qui détaille les différentes étapes à réaliser pendant un vol. Pour chacune de ces phases et grâce aux données qui lui sont fournies par l'installation d'essais embarquée, l'ingénieur navigant:
- assiste les pilotes de l'avion pour placer celui-ci dans les conditions requises pour un essai,
- mène l'essai,
- assure la liaison avec les spécialistes avion qui le suivent en temps réel depuis le sol via les moyens de télémesure,
- assure les conditions de sécurité pour l'équipage et l'avion.

Toutes les données de l'avion sont enregistrées pendant le vol, puis exploitées au sol par des ingénieurs des différentes spécialités.

Les fonctions principales des moyens embarqués sur un avion d'essais sont :
- la conduite d'essais : différents écrans comprenant des synoptiques ou des courbes permettant de juger de la validité d'un essai,
- la surveillance de l'installation d'essai,
- le calcul en temps réel du modèle de l'avion,
- le stockage de données élaborées,
- l'élaboration en dynamique d'un message de télémesure.

Les installations embarquées permettent d'espionner l'avion pendant les vols d'essais par des moyens spécifiques qui n'interfèrent pas avec l'appareil ou ses systèmes. Elles sont constituées en quatre niveaux:
- les capteurs (ou points de piquages) et la mise en forme des mesures dont le rôle est de fournir les paramètres élémentaires de l'avion,
- le traitement, puis la présentation de certaines informations à l'ingénieur navigant d'essais pour lui permettre de mener l'essai,
- l'envoi vers le sol en temps réel de certaines informations pour le suivi de l'essai par des spécialistes en télémesure,
- le stockage de toutes les informations recueillies ou calculées pour effectuer des analyses approfondies au sol en temps différé.

C'est ainsi que, pour chaque seconde de vol, plus de six mille chaînes de mesures fournissent près de cent mille informations.

Pour conduire les essais en vol sur un avion, les ingénieurs navigants ont besoin de visualiser un grand nombre d'informations en provenance des capteurs de l'avion.

Cette fonction essentielle au bon déroulement de l'essai est fournie par les calculateurs CUB (« Calculateur Universel de Bord ») qui regroupent l'ensemble des équipements, acquièrent les données mesurées, traitent celles-ci et présentent à l'ingénieur navigant d'essais les paramètres avion, en temps réel, durant le vol. Les systèmes de l'art connu soufrent d'une grande sensibilité aux problèmes matériels et logiciels des calculateurs CUB. Une panne simple peut conduire l'avion à arrêter les essais prévus avec des conséquences importantes sur les coûts.

Le problème majeur des systèmes de l'art connu est de fonctionner dans des environnements de centre informatique qui n'est pas le domaine d'utilisation des systèmes embarqués. En effet ces systèmes embarqués ont la particularité de devoir fonctionner dans un mode complètement autonome : aucune intervention d'un ingénieur n'est possible pour reconfigurer le système en cas de problème. Ceci conduit à définir une architecture matérielle et des composants logiciels formant un automate appelés « Fault Tolérant ». La seule intervention humaine permise consiste en la mise sous tension et hors tension des calculateurs.

Un système de l'art antérieur est décrit dans le document de Brajοu et al. Intitulé "The airbus A380- an AFDX-based flight test computer concept", Autotestcon 2004.

Pour ne pas risquer de perdre un essai en cas de panne matériel des calculateurs de conduite d'essais, l'invention a pour objet une architecture matérielle et logicielle capable de se reconfigurer automatiquement en cas de défaillance d'un calculateur.

### EXPOSÉ DE L'INVENTION

L'invention concerne un système de traitements embarqués d'essais en vol, caractérisé en ce qu'il comprend un ensemble de calculateurs banalisés et interchangeables reliés à un réseau Ethernet, un logiciel identique étant installé sur chaque calculateur, et en ce que chaque calculateur comprend des moyens de surveillance des autres calculateurs de l'ensemble permettant de savoir à tout moment quels sont les calculateurs partenaires, et quelles sont les taches utilisées par chaque calculateur, ces moyens de surveillance utilisant un fichier de stratégies, identique sur chaque calculateur, qui décrit de manière exhaustive toutes les informations de l'ensemble des calculateurs, et dans lequel les taches pour chaque calculateur sont listées.

Avantageusement le logiciel installé sur chaque calculateur comprend les modules suivants :
- des premiers moyens « gestionnaire de disponibilité » qui gèrent les applications en fonction des éléments apportés par les autres moyens,
- une table statique, appelée « fichier des stratégies », qui définit le fonctionnement de chaque calculateur,
- des seconds moyens « surveillant du groupe », pour décrire la constitution du groupe de calculateurs à tout instant,
- des troisièmes moyens « surveillant des applications », qui surveillent l'état des applications en cours d'exécution sur le système,
- des quatrièmes moyens « gestionnaire de contexte », qui sont chargés de gérer le contexte du calculateur.

Avantageusement le fichier de stratégies décrit de manière exhaustive toutes les configurations de l'ensemble de calculateurs et, à tout instant, chacun des calculateurs a la connaissance, par la composition de l'ensemble, de la liste des tâches qu'il doit exécuter mais aussi la liste des tâches qui doivent être hébergées par les autres calculateurs. Le fichier des stratégies comprend :
- une première partie qui décrit les blocs d'applications en associant à un nom logique, une liste d'exécutables qui représente un service ou un ensemble de services à rendre,
- une seconde partie qui s'attache à associer à chaque calculateur, susceptible d'appartenir à l'ensemble, le nom d'une fonction disponible,
- une troisième partie qui permet de lier un bloc d'applications avec chacune des fonctions que peuvent remplir les calculateurs.

Le surveillant du groupe émet cycliquement un message contenant le nom et l'adresse du calculateur sur lequel il s'exécute. Il remplit deux fonctions :
- il signale cycliquement la présence d'un calculateur sur le réseau aux autres calculateurs,
- il reste à l'écoute du réseau afin d'établir et de maintenir la liste des calculateurs de l'ensemble.

Le surveillant des applications examine cycliquement l'état des applications lancées sur le calculateur et signale les anomalies au gestionnaire de disponibilité. Le gestionnaire de contexte a deux fonctions :
- Il écrit un journal de traces des applications qui regroupe les informations de déroulement et les erreurs de chaque application, les changements de stratégies appliquées au changement du groupe.
- Il diffuse vers les autres calculateurs les fichiers du contexte des applications en vue d'un éventuel déplacement de tâche d'un calculateur vers un autre lors d'un changement de composition de l'ensemble de calculateurs du fait de changement de stratégie. Le gestionnaire de disponibilité lance, relance on arrête les applications selon les consignes du fichier de stratégies et tient à jour la table de situation des processus qui permet à un système de communication inter-tâches de connaître l'adresse de chaque application.

Avantageusement chaque calculateur est un calculateur UNIX et utilise des boîtiers d'entrée/sortie LINUX pour les fonctions périphériques.

L'invention concerne également un procédé de traitements embarqués d'essais mettant en oeuvre un système de traitement comprenant un ensemble de calculateurs banalisés et interchangeables reliés à un réseau Ethernet, un logiciel identique étant installé sur chaque calculateur, caractérisé en ce que, en cas de panne d'un calculateur, on a les étapes suivantes :
- détection de l'anomalie par les calculateurs toujours opérationnels,
- reconfiguration automatique du système en fonction d'une stratégie déterminée dans un fichier de stratégies, identique sur chaque calculateur, qui décrit de manière exhaustive toutes les configurations de l'ensemble des calculateurs, et dans lequel les taches pour chaque calculateur sont listées,
- maintien des fonctions essentielles à l'essai.

Le système de l'invention repose sur des éléments nouveaux dans le domaine embarqué:
- une architecture articulée autour d'un réseau Ethernet avec des calculateurs UNIX banalisés et interchangeables (grille de calculateurs) et des boîtiers entrée/sortie Linux pour les fonctions périphériques,
- des éléments de logiciel assurant:
   - la surveillance mutualisée du fonctionnement des calculateurs,
   - un dispositif de reconfiguration à partir de stratégies prédéfinies,
   - la prise en compte de la fonction du calculateur par clé additionnelle,
   - une surveillance des applications,
   - le maintien et la diffusion du contexte des applications,
   - la tenue d'un journal d'événements et d'erreurs des machines et des applications,
   - la localisation dynamique des différentes fonctions.

Tous les calculateurs sont configurés de manière identique, ont le même poids dans l'ensemble et sont donc interchangeables. Chacun a les caractéristiques suivantes :
- Quatre tâches fonctionnent sur chaque calculateur : le surveillant de groupe, le gestionnaire de contexte, le surveillant des applications et le gestionnaire de disponibilité.
- La cohérence du groupe est assurée par le fichier de stratégies qui est identique sur chaque machine.
- Il n'y a pas de dialogue entre les calculateurs si ce n'est l'émission d'un signal de vie.

### BREVE DESCRIPTION DES DESSINS

- La figure 1 illustre le poste de l'ingénieur navigant d'essais mettant en oeuvre le système de l'invention,
- la figure 2 illustre l'architecture du système de l'invention,
- la figure 3 illustre l'architecture de l'ensemble logiciel des calculateurs élémentaires du système de l'invention,
- les figures 4A et 4B illustrent un exemple de fonctionnement de tolérance aux pannes selon l'invention.

### EXPOSE DETAILLE DE MODES DE REALISATION PARTICULIERS

Le système de traitements embarqués d'essais en vol de l'invention incorpore six fonctions sur une même plate-forme matérielle (« hardware ») :
- une fonction conduite d'essais : visualisation, surveillance des essais en vol, commandes des équipements d'essais en vol.
- une fonction détection d'évènements : équipements, paramètres, stockage.
- une fonction pré-exploitation : modèles (charges, performance, etc.), déclencheurs (« Triggers »), qualité réseau électrique, paramètre dérivés, etc.
- une fonction traitements large bande : FFT (« Fast Fourrier Transformer »), critères de confort, détection de crêtes, statistiques.
- une fonction télémesure : élaboration du message télémesure.
- une fonction de surveillance du réseau de communication redondant de type éthernet commuté dit « réseau AFDX », tel que décrit dans les documents référencés [1] et [2] en fin de description.

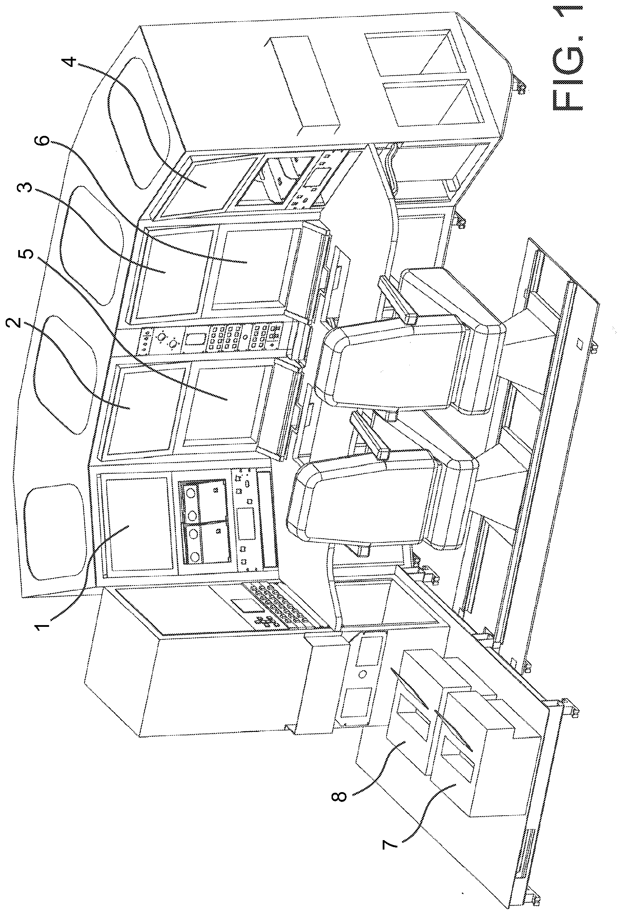

Pour le contrôle d'un tel système, l'ingénieur navigant d'essais a à sa disposition un poste, tel qu'illustré sur la figure 1, qui comprend notamment :
- quatre écrans partie haute 1, 2, 3, 4
- deux traceurs graphiques 5, 6
- deux imprimantes couleurs 7, 8.

L'architecture de l'installation d'essai en vol commutée de l'invention est basée sur quatre niveaux de traitement de données :
- un premier niveau, ou niveau capteur,
- un second niveau, ou niveau acquisition,
- un troisième niveau, ou niveau de concentration,
- un quatrième niveau, ou niveau d'enregistrement et d'analyse.

Dans le premier niveau est réalisé la conversion de chaque grandeur physique (pression, température, force...) en une grandeur électrique mesurable : tension ou courant. Certains systèmes de ce niveau peuvent intégrer une partie de fonctions du second niveau, telles que : filtrage, conversion analogique-numérique...

Les systèmes du second niveau concernent l'acquisition analogique, numérique, discrète. Ces systèmes réalisent notamment les tâches suivantes :
- pour des entrées numériques : contrôle de capteur, filtrage analogique, échantillonnage de données et conversion analogique-numérique, fonctions mathématiques limitées...,
- pour des entrées numériques : tri d'étiquettes, filtrage,
   - pour toutes les entrées : marquage du temps en fonction de la synchronisation globale, mise en forme de données en paquets, tri de paquets vers leurs destinations (groupes du quatrième niveau).

Le troisième niveau est le niveau où sont rassemblés les flux de données provenant de tous les systèmes du second niveau vers les systèmes du quatrième niveau. Il n'y a aucune modification de la donnée à travers ce troisième niveau. Les seules fonctions sont des aiguillages et des duplications des trames incidentes qui sont réalisées par des commutateurs Ethernet standard.

Les systèmes du quatrième niveau sont des systèmes bord abonnés au flux des paramètres avion, tels que :
- stockage de données de masse pour une analyse ultérieure au sol,
- réalisation d'un pré-traitement par les unités de traitement d'essais à bord et affichage pour les ingénieurs d'essais en vol,
- télémétrie.

Une base de données de test en vol, dans laquelle la configuration de chaque système est prévue, gère tous les systèmes de l'installation d'essais en vol. Cette base de données décrit l'évolution de chaque paramètre avion du tout début de sa vie (phénomène physique) à son stockage en paquets.

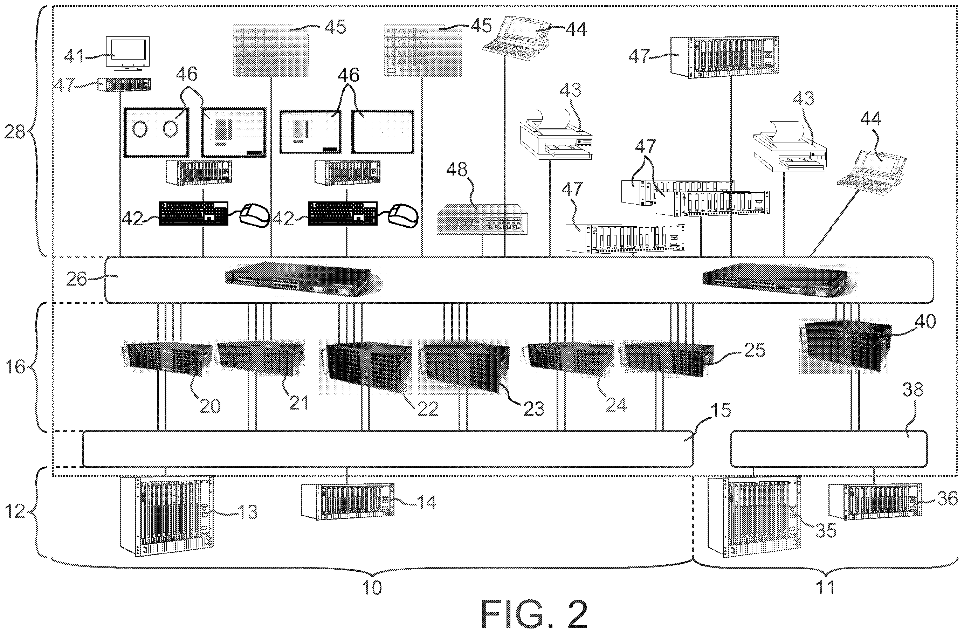

Comme illustrée sur la figure 2, l'installation d'essais en vol commutée de l'invention comprend :
- une chaîne de base 10,
- une chaîne large bande 11,

La chaîne de base 10 comprend :
- au premier niveau non représenté sur la figure :
   - la mesure de paramètres,
   - l'arrivée d'un bus « full duplex »,
- au second niveau 12 :
   - des unités AFDX 13, et standard 14,
- au troisième niveau :
   - des unités de commutation 15,
- au quatrième niveau 16 :
   - plusieurs unités de traitement 20 à 25 qui correspondent respectivement à :
- des unités de conduite d'essais 20 et 21,
- des unités de pré-exploitation 22 et 23,
- une unité de télémesure 24,
- une unité de surveillance du réseau AFDX (25)
   - une unité de commutation Ethernet 26,
   - des unités d'enregistrement et d'analyse 28 à la disposition de l'ingénieur navigant d'essais, qui sont, par exemple, des écrans 41, des claviers + souris 42, des imprimantes 43, des portables 44, des traceurs graphiques 45, des recopies d'écran 46, des boîtiers d'entrée/sortie 47, une unité 48 d'interrogation des calculateurs avion et de changement des paramètres de ces calculateurs.

La chaîne large bande 11 comprend :
- au premier niveau non représenté sur la figure :
   - la mesure de paramètres large bande,
- au second niveau :
   - des unités AFDX 35 et standard 36,
- au troisième niveau :
   - une unité de commutation 38,
- au quatrième niveau :
   - une unité de traitement 40.
   - une unité de commutation Ethernet déjà référencée 26.

L'architecture générale du système comprend un ensemble de calculateurs élémentaires 50, dans lequel chaque calculateur élémentaire collabore pour rendre un service mais aussi en augmenter la disponibilité. Un ensemble logiciel assure les fonctions de disponibilité.

Afin de faciliter l'évolutivité de l'ensemble, on définit un ensemble logiciel identique sur chacun de ces calculateurs. De ce fait, à tout instant, tous les calculateurs ont un rôle équivalent. En d'autres termes, aucun de ces calculateurs n'est considéré comme un maître ou un serveur principal. Cet ensemble de calculateurs ne comporte aucune limitation en nombre.

Pour pallier la mainmise d'un serveur maître et les dialogues de passage d'ordres on donne les moyens à chaque calculateur 50 de savoir à tout instant quels sont ses partenaires et quelles sont les tâches que chacun exécute. Cette connaissance obtenue par les messages de vie (« heartbeat ») envoyés par chacun des calculateurs, permet d'établir et de maintenir la liste des calculateurs présents. Cette liste est le point d'entrée qui permet de déterminer les tâches que chaque calculateur doit héberger. Cette information est disponible dans le fichier décrivant les stratégies à adopter pour chaque calculateur en fonction de la constitution du groupe.

Comme illustré sur la figure 2 l'architecture de l'ensemble logiciel des calculateurs élémentaires 50 reliés à un réseau Ethernet 51, comprend pour chaque calculateur donné :
- un premier module 52, appelé « gestionnaire de disponibilité », qui gère les applications en fonction des éléments apportés par les autres modules,
- une table statique 53, appelée « fichier des stratégies », qui définit le fonctionnement de chaque calculateur 50,
- un second module 54, appelé « surveillant du groupe », pour décrire la constitution de l'ensemble de calculateurs 50 à tout instant,
- un troisième module 55, nommé « surveillant des applications », qui surveille l'état des applications 56 en cours d'exécution sur le système,
- un quatrième module 57, nommé « gestionnaire de contexte », qui est chargé de gérer le contexte du calculateur donné 50.

On va décrire, ci-dessous, chacun de ces modules 52, 54, 55 et 57 ainsi que la table statique 53 pour un calculateur donné 50.

### Le fichier des stratégies

Le fichier de stratégies 53 décrit de manière exhaustive toutes les configurations de l'ensemble de calculateurs; pour chaque cas et chaque calculateur les tâches que chacun doit exécuter sont listées. De ce fait, à tout instant chacun des calculateurs a la connaissance, par la composition de l'ensemble, de la liste des tâches qu'il doit exécuter mais aussi la liste des tâches qui doivent être hébergées par les autres calculateurs de l'ensemble.

Cette table 53 de fonctionnement des calculateurs décrit, tour à tour, les groupes d'applications, les calculateurs et les stratégies à appliquer. Cette table 53 identique sur tous les calculateurs de l'ensemble. Elle permet à chaque calculateur de connaître:
- la fonction qu'il doit remplir,
- les applications qu'il doit héberger et surveiller,
- la situation des autres calculateurs.

Le fichier des stratégies 53 définit la configuration du système sous trois aspects.

Une première partie décrit les blocs d'applications en associant à un nom logique, une liste d'exécutables qui représente un service ou un ensemble de services à rendre. Plusieurs noms peuvent être définis, de cette manière. Il faut s'assurer, en créant ces listes, que la même tâche ne puisse pas se trouver dans plusieurs blocs d'applications susceptibles d'être exécutés simultanément sur un ou plusieurs calculateurs. Les exécutables sont connus par le nom de leur programme de lancement. L'ordre dans lequel ils apparaissent dans la liste détermine l'ordre de démarrage de chaque tâche. Le nom des programmes de lancement des applications est suivi d'un champ qui permet de déterminer le mode dans lequel le programme sera lancé. Au moins deux modes différents peuvent être spécifiés : un mode « Attente » et un mode « Non Surveillé ». Le mode attente correspond à des tâches dont il est nécessaire d'attendre la fin d'exécution avant de lancer les suivantes dans la liste. Ce mode permet d'effectuer des enchaînements que le mode normal «à la volée» n'autorise pas. Il peut s'agir d'une tâche qui configure un élément avant que les autres tâches l'utilisent. Ce mode garantit le lancement séquentiel.

Une seconde partie s'attache à associer à chaque calculateur, susceptible d'appartenir à l'ensemble, le nom d'une fonction disponible. Le nombre de ces fonctions est au minimum égal au nombre de calculateurs maximum pouvant constituer l'ensemble. A tout moment chaque calculateur a un rôle unique dans l'ensemble. Une de ces fonctions peut être de n'exécuter aucune application en fonctionnement nominal et de rester prêt à remplacer, un pour un, un calculateur défaillant dans le cadre d'une redondance complète. Dans la majorité des cas, ces fonctions correspondent aux services que doivent rendre les calculateurs, augmentées de toutes les fonctions correspondant aux différents modes dégradés acceptables.

Une troisième partie permet de lier un bloc d'applications avec chacune des fonctions que peuvent remplir les calculateurs. Cette partie décrit, de manière exhaustive, toutes les combinaisons entre les différents calculateurs possibles. Pour chaque combinaison, chacun des calculateurs entrant dans la combinaison se voit affecté un bloc d'applications.

Un même fichier des stratégies 53 peut donc être installé sur plusieurs avions ayant une installation identique. Il permet également d'opérer des remplacements de calculateurs 50 suite à des pannes matérielles sans avoir à adapter le fichier des stratégies. Cette dernière faculté est conditionnée par l'échange avec un autre calculateur capable de remplir la même fonction, Cela signifie en particulier, que les configurations en matière de périphériques doivent être strictement identiques.

### Le surveillant du groupe

Le surveillant du groupe 54 émet cycliquement un signal de vie pour le système et en écoutant les signaux de vie des autres calculateurs, constitue et tient à jour la liste de composition de l'ensemble.

Le surveillant du groupe 54 remplit deux fonctions :
- Il signale cycliquement la présence d'un calculateur 50 sur le réseau aux autres calculateurs.
- Il reste à l'écoute du réseau afin d'établir et de maintenir la liste des calculateurs de l'ensemble.

Le surveillant de groupe 54 émet périodiquement un message contenant le nom et l'adresse IP (« Internet Protocol ») du calculateur sur lequel il s'exécute. Ce message est envoyé en mode diffusion sur le réseau 51 pour informer tous les autres membres. Le choix d'une communication « multicast » (multi-destinataires), permet de donner une identification à l'ensemble. Ainsi, on peut créer plusieurs ensembles de calculateurs sur un même réseau.

Un fichier de configuration est associé au surveillant du groupe. Il contient entre autres l'adresse « multicast » du groupe et des variables de temps qui permettent de régler les périodes d'émission de messages de vie. Ce fichier de paramétrage doit être identique sur chacun des membres d'un même ensemble de calculateurs.

La seconde fonction du surveillant du groupe 54 est de rester à l'écoute des signaux de vie des autres calculateurs 50. A partir des messages qu'il reçoit, il établit la liste des calculateurs qu'il communique au gestionnaire de disponibilité 52. Ensuite, il maintient cette liste, c'est-à-dire qu'il y ajoute ou supprime des calculateurs 50 en fonction des messages reçus. Lorsqu'un changement intervient dans l'ensemble, le surveillant de groupe 54 communique la nouvelle liste au gestionnaire de disponibilité 52. Un calculateur 50 est supprimé de la liste dans le cas où il n'a émis aucun signe de vie pendant plusieurs périodes consécutives. Ce nombre de périodes est un des paramètres contenus dans le fichier de configuration.

Par le biais de son canal de communication avec le gestionnaire de disponibilité 52, le surveillant de groupe 54 est informé de la disparition de ce dernier. Dans cette éventualité, le surveillant de groupe 54 arrête d'émettre ses signes de vie, car la disparition du gestionnaire de disponibilité 52 implique que les applications ont elles aussi disparu ou au moins qu'elles ne sont pas toutes dans un état opérationnel.

Le surveillant du groupe 54 est le garant de la cohérence de l'ensemble. Il permet au système de connaître à tout moment la constitution de l'ensemble de calculateurs, non seulement ses membres mais aussi les applications qu'ils hébergent. Ces informations sont déduites de la constitution de l'ensemble de calculateurs et du fichier des stratégies 53. Tous les calculateurs 50 ayant un fichier de stratégies identique, la cohérence du système tient dans la confiance qui peut être accordée à la liste des calculateurs.

### Le surveillant des applications

Le surveillant des applications 55 examine cycliquement l'état des applications lancées sur le calculateur 50 et signale les anomalies au gestionnaire de disponibilité.

Le surveillant des applications 55 vérifie périodiquement que les applications sont actives.

Au démarrage, le surveillant des applications 55 lit le fichier de configuration afin de prendre en compte les paramètres de temps qui le concernent. Ce fichier est le même que celui qui contient les paramètres du surveillant de groupe 54.

Le surveillant des applications 55 reçoit la liste des applications que le gestionnaire de disponibilité 52 a lancées. Cette liste contient les noms des applications et leurs identifiants.

Cycliquement, il interroge chacune d'elles pour contrôler leur activité. Dans le cas d'une disparition ou d'un fonctionnement anormal d'une des applications, il en informe le gestionnaire de disponibilité. Son rôle se limite à surveiller les applications et à renseigner le gestionnaire de disponibilité 52 pour lui permettre de traiter les défaillances.

Le cas échéant, le surveillant des applications 55 est informé de la disparition du gestionnaire de disponibilité 52 par son canal de communication. Dans ce cas, sa surveillance n'a plus aucune utilité puisque, seul, il ne peut ni décider, ni agir.

### Le gestionnaire de contexte

Le gestionnaire de contexte 57 a deux fonctions :
- il écrit un journal de traces des applications qui regroupe les informations de déroulement et les erreurs de chaque application, les changements de stratégies appliquées au changement de l'ensemble. Le fichier qui en résulte permet de suivre précisément la vie du système.
- il diffuse vers les autres calculateurs 50 les fichiers du contexte des applications en vue d'un éventuel déplacement de tâche d'un calculateur 50 vers un autre lors d'un changement de composition de l'ensemble de calculateurs du fait de changement de stratégie.

Le gestionnaire de contexte 57 est un utilitaire qui rend deux services. Il organise le fichier de traces du calculateur d'une part et d'autre part, il assure un service d'écrivain local et distant des fichiers de reprise des applications.

Au lancement, le gestionnaire de contexte 57 procède à une sauvegarde datée du fichier de traces avant de l'ouvrir pour la session en cours. Le but recherché est de conserver l'historique du système à chaque démarrage.

Dans le but d'obtenir un outil de diagnostic facilement exploitable, le gestionnaire de contexte 57 met en place une boite aux lettres à laquelle chaque application envoie ses messages d'informations, de traces ou d'erreurs. Le gestionnaire de contexte est en charge de vider cette boite aux lettres et d'organiser les messages dans un fichier unique. Cette unicité permet d'obtenir facilement le suivi chronologique des événements et de détecter les éventuelles interactions entre les applications.

Un ensemble d'outils permet d'exploiter ce fichier par extraction d'une application, d'une sévérité, d'une zone de temps,...

Un éventail de fonctions est à la disposition des applications pour écrire leurs messages. Ces fonctions, regroupées dans une bibliothèque, masquent les mécanismes mis en place et sont utilisées par les programmeurs comme des appels de programmes classiques.

Certaines applications changent de contexte au cours de leur exécution. Dans l'éventualité d'un arrêt et d'un redémarrage d'applications, que se soit sur le calculateur hôte ou sur un calculateur élémentaire, il est important de ne pas perdre ce contexte et de ne pas redémarrer en phase initiale. Le concept de fichier de reprise vient pallier ce problème et permet de repartir dans le même contexte qu'avant l'arrêt.

La possibilité d'établir un fichier de reprise est offerte aux applications par l'intermédiaire d'un jeu de fonctions contenues dans une bibliothèque. La tâche qui désire profiter de cette possibilité poste un message avec ses données de reprise dans une boite aux lettres gérées par le gestionnaire de contexte. Ce dernier la vide régulièrement, écrit les données dans le fichier de reprise de l'application et le diffuse aux autres calculateurs de l'ensemble.

### Le gestionnaire de disponibilité

Le gestionnaire de disponibilité 52 lance, relance on arrête les applications selon les consignes du fichier de stratégies 53 et tient à jour la table de situation des processus qui permet à un système de communication inter-tâches de connaître l'adresse de chaque application. Par ailleurs, il est toujours en attente d'une nouvelle version logicielle à mettre en place.

Le gestionnaire de disponibilité 52 est au centre de l'ensemble logiciel. Il regroupe de nombreuses fonctions:
- chargement du fichier des stratégies,
- récupération et exploitation des informations émises par le surveillant de groupe 54,
- détermination de la stratégie à appliquer et lancement des applications,
- communication au surveillant des applications de la liste des applications lancées,
- arrêt, lancement et relance des applications selon les stratégies ou les incidents applicatifs,
- gestion d'une table d'informations sur les processus, consultable par les applications,
- détection et mise en place d'un nouvel ensemble logiciel.

A l'initialisation, le gestionnaire de disponibilité 52 consulte le fichier de configuration pour récupérer les paramètres dont il a besoin.

Le gestionnaire de disponibilité 52 vérifie que les variables d'environnement nécessaires au lancement des applications sont bien positionnées. Dans le cas contraire, une erreur est remontée et le gestionnaire de disponibilité s'arrête.

Afin de réagir correctement, le gestionnaire de disponibilité 52 charge en mémoire le fichier des stratégies 53. Pendant toute son activité, le gestionnaire de disponibilité consulte cette table pour prendre les décisions qui s'imposent lors des notifications du surveillant de groupe ou encore pour tenir à jour la table des informations sur les processus applicatifs.

Le gestionnaire de disponibilité reste à l'écoute de son canal de communication avec le surveillant de groupe 54. Dès qu'il reçoit un avis de modification du groupe, il consulte le fichier des stratégies 53 et détermine le bloc des applications qu'il doit mettre en place.

Il compare la liste d'applications qu'il doit faire tourner, à celle des applications actives et en déduit la série des actions à effectuer.

De plus, le gestionnaire de disponibilité 52 écoute son canal de communication avec le surveillant des applications. Sur notification de ce dernier, il arrête et relance l'application qui lui a été signalée défaillante. Cette opération ne peut se reproduire indéfiniment. Après un certain nombre de relances, déterminé par un paramètre du fichier de configuration, le gestionnaire de disponibilité 52 déclare l'application non valide, ce qui a pour effet de l'arrêter définitivement.

La procédure d'arrêt peut être activée pour la totalité des tâches actives avant l'arrêt du gestionnaire de disponibilité ou pendant la procédure de mise en place d'un nouvel ensemble logiciel.

Une possibilité d'arrêt et de relance de l'ensemble des applications existe aussi à des fins de mise au point ou de maintenance au sol.

La principale fonction de la table des informations sur les processus est d'indiquer à chaque application les adresses des autres tâches pour qu'elles puissent communiquer.

Cette table contient tout d'abord un verrou qui interdit sa lecture pendant que le gestionnaire de disponibilité 52 la remplit. La seconde information d'ordre général qu'elle contient est le nombre de tâches qui tournent sur le système global.

Les autres indications concernent chacun des processus lancés dans l'ensemble des calculateurs 50. Le gestionnaire de disponibilité 52 renseigne cette table à chaque changement de stratégie. Par la connaissance de la composition de l'ensemble et de la table des Stratégies, le gestionnaire de disponibilité 52 peut déterminer le calculateur hôte d'une tâche donnée.

Pour chaque processus sont indiqués successivement l'identifiant de la tâche, le nom du calculateur sur lequel il est actif, l'adresse IP (« Internet Protocol ») de ce calculateur, les caractéristiques de la tâche et l'indication de tâche valide/non valide qui indique les tâches systématiquement défaillantes.

Périodiquement, le gestionnaire de disponibilité 52 contrôle si un nouvel ensemble logiciel doit être installé. Le nouvel ensemble logiciel est déposé par un ordinateur portable sur les calculateurs par une procédure. Il est déposé dans un répertoire déterminé sous la forme de plusieurs fichiers archives compressés.

La détection de ces fichiers, entraîne l'arrêt de toutes les applications. Le gestionnaire de disponibilité décompresse les différents fichiers, les copie, les déplace et les désarchive. Suite à ces opérations, le gestionnaire de disponibilité 52 relit le fichier des stratégies 53 et relance les applications.

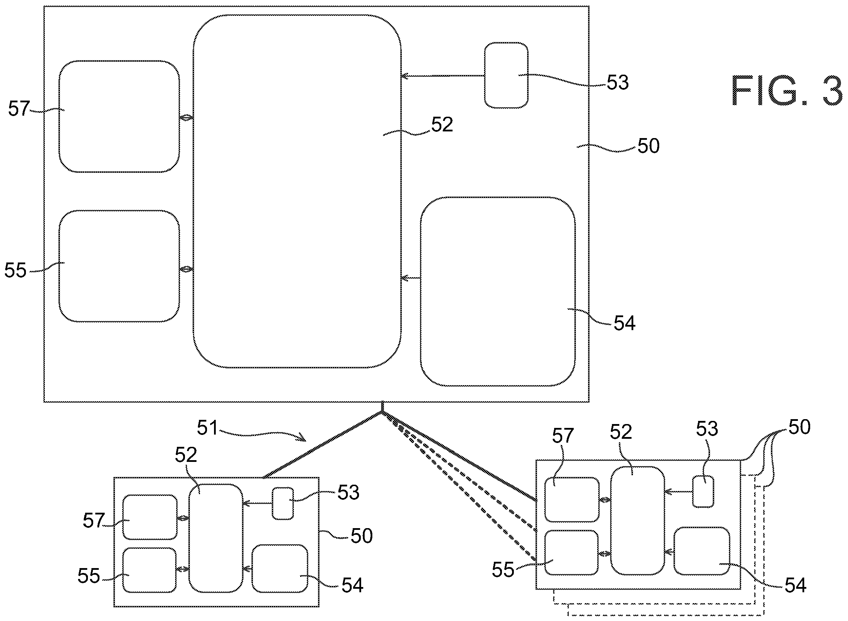

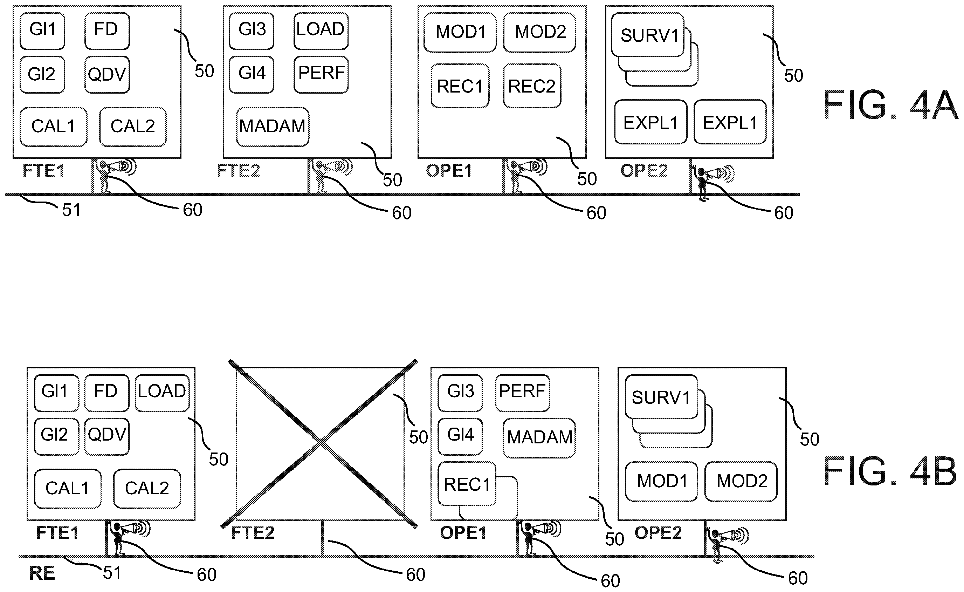

Le système de l'invention, tel qu'illustré sur la figure 3 est capable de se reconfigurer automatiquement en cas de défaillance d'un calculateur. Les figures 4A et 4B illustrent un exemple d'un tel fonctionnement. Sur la figure 4A, quatre calculateurs 50 (fonctions FTE1, FTE2, OPE1, OPE2) sont reliés au réseau Ethernet 51 et communiquent entre eux (voir personnage référencé 60). Ils comprennent chacun plusieurs tâches. La stratégie de l'ensemble des calculateurs 50 est bonne. Sur la figure 4B, la stratégie FTE2 du second calculateur est mauvaise. Les tâches qui étaient située préalablement dans cette fonction FTE2 ont été réparties dans les autres calculateurs 50.

### REFERENCES

[1] "An AFDX-based flight test system" de Hervé Gâchette, Philippe Rico et François-Henri Worm (Creative Electronic Systems; Adresse Internet : http://www.sfte.org/newsletter/euro_4-1.pdf, mai 2004.)
[2] "AIM to provide common standard AFDX databus analysers for the Airbus A 380" (revue de presse de la société AIM à l'adresse internet : http://www.airforcetechnology.com/contractors/manufactu ring/aim/press1.html, 17 octobre 2003).

## Revendications

1. Système de traitements embarqués d'essais en vol, qui comprend un ensemble de calculateurs banalisés et interchangeables (50) reliés à un réseau Ethernet (51), un logiciel identique étant installé sur chaque calculateur, **caractérisé en ce que** chaque calculateur comprend des moyens de surveillance des autres calculateurs de l'ensemble permettant de savoir à tout moment quels sont les calculateurs présents sur le réseau, et quelles sont les tâches utilisées par chaque calculateur, ces moyens de surveillance utilisant une table statique « fichier de stratégies » (53), identique sur chaque calculateur, qui décrit de manière exhaustive toutes les configurations de l'ensemble de calculateurs, et dans laquelle, à tout instant, chacun des calculateurs a la connaissance, par la composition de l'ensemble des calculateurs, de la liste des tâches qu'il doit exécuter mais aussi la liste des tâches qui doivent être hébergées par les autres calculateurs, et **en ce que** le logiciel installé sur chaque calculateur (50) comprend :
- des moyens « gestionnaire de disponibilité » (52), qui gèrent les applications en fonction des éléments apportés par des moyens « surveillant du groupe » (54), des moyens « surveillant des applications » (55) et des moyens « gestionnaire de contexte » (57),
- la table statique (53), qui définit le fonctionnement de chaque calculateur (50),
- les moyens « surveillant du groupe » (54), qui décrivent la constitution du groupe de calculateurs à tout instant,
- les moyens « surveillant des applications » (55), qui surveillent l'état des applications (56) en cours d'exécution sur le système,
- les moyens « gestionnaire de contexte » (57), qui gèrent le contexte du calculateur sur lequel ils sont implantés, le gestionnaire de contexte ayant deux fonctions:
- Il écrit un journal de traces des applications qui regroupe les informations de déroulement et les erreurs de chaque application, les changements de stratégies appliquées au changement de l'ensemble, résultant en un fichier de contexte,
- Il diffuse vers les autres calculateurs les fichiers du contexte des applications en vue d'un éventuel déplacement de tâche d'un calculateur vers un autre lors d'un changement de composition de l'ensemble de calculateurs du fait de changement de stratégie.

2. Système selon la revendication 1, dans lequel le fichier des stratégies comprend :
- une première partie qui décrit les blocs d'applications en associant à un nom logique, une liste d'exécutables qui représente un service ou un ensemble de services à rendre,
- une seconde partie qui s'attache à associer à chaque calculateur, susceptible d'appartenir à l'ensemble, le nom d'une fonction disponible,
- une troisième partie qui permet de lier un bloc d'applications avec chacune des fonctions que peuvent remplir les calculateurs.

3. Système selon la revendication 1, dans lequel le surveillant du groupe émet cylindriquement un message contenant le nom et l'adresse du calculateur sur lequel il s'exécute.

4. Système selon la revendication 3, dans lequel le surveillant du groupe remplit deux fonctions :
- il signale cycliquement la présence d'un calculateur sur le réseau aux autres calculateurs,
- il reste à l'écoute du réseau afin d'établir et de maintenir la liste des calculateurs de l'ensemble.

5. Système selon la revendication 1, dans lequel le surveillant des applications examine cycliquement l'état des applications lancées sur le calculateur et signale les anomalies au gestionnaire de disponibilité.

6. Système selon la revendication 1, dans lequel le gestionnaire de disponibilité lance, relance on arrête les applications selon les consignes du fichier de stratégies et tient à jour la table de situation des processus qui permet à un système de communication inter-tâches de connaître l'adresse de chaque application.

7. Système selon la revendication 1, dans lequel chaque calculateur est un calculateur UNIX.

8. Système selon la revendication 7, qui comprend des boîtiers d'entrée/sortie LINUX pour des fonctions périphériques.

9. Procédé de traitements embarqués d'essais mettant en oeuvre un système de traitement comprenant un ensemble de calculateurs présents sur le réseau et interchangeables (50) reliés à un réseau Ethernet (51), un logiciel identique étant installé sur chaque calculateur (50), **caractérisé en ce que**, en cas de panne d'un calculateur, on a les étapes suivantes :
- détection de l'anomalie par les calculateurs toujours opérationnels,
- reconfiguration automatique du système en fonction d'une stratégie déterminée dans un fichier de stratégies (53), identique sur chaque calculateur, qui décrit de manière exhaustive toutes les configurations de l'ensemble de calculateurs, et dans lequel, à tout instant, chacun des calculateurs a la connaissance, par la composition de l'ensemble des calculateurs, de la liste des tâches qu'il doit exécuter mais aussi la liste des tâches qui doivent être hébergées par les autres calculateurs,
- maintien des fonctions essentielles à l'essai,
et **en ce que** le logiciel installé sur chaque calculateur comprend :
- des moyens « gestionnaire de disponibilité » (52), qui gèrent les applications en fonction des éléments apportés par des moyens « surveillant du groupe » (54), des moyens « surveillant des applications » (55) et des moyens « gestionnaire de contexte » (57),
- la table statique (53) qui définit le fonctionnement de chaque calculateur (20),
- les moyens « surveillant du groupe » (54), qui décrivent la constitution du groupe de calculateurs à tout instant,
- les moyens « surveillant des applications » (55), qui surveillent l'état des applications (56) en cours d'exécution sur le système,
- les moyens « gestionnaire de contexte » (57), qui gèrent le contexte du calculateur sur lequel ils sont implantés, le gestionnaire de contexte ayant deux fonctions:
- Il écrit un journal de traces des applications qui regroupe les informations de déroulement et les erreurs de chaque application, les changements de stratégies appliquées au changement de l'ensemble, résultant en un fichier de contexte,
- Il diffuse vers les autres calculateurs les fichiers du contexte des applications en vue d'un éventuel déplacement de tâche d'un calculateur vers un autre lors d'un changement de composition de l'ensemble de calculateurs du fait de changement de stratégie.

## Patentansprüche

1. System für bordgestützte Verarbeitungen von Testflügen, das eine Einheit von alltäglichen und austauschbaren Rechnern (50) umfasst, die mit einem Ethernet-Netz (51) verbunden sind, wobei auf jedem Rechner eine identische Software installiert ist, **dadurch gekennzeichnet, dass** jeder Rechner Mittel zur Überwachung der anderen Rechner der Einheit umfasst, die es ermöglichen, jederzeit zu wissen, welche die Rechner sind, die im Netz vorhanden sind, und welche die von jedem Rechner verwendeten Aufgaben sind, wobei diese Überwachungsmittel eine statische Tabelle "Datei von Strategien" (53) verwenden, die auf jedem Rechner identisch ist, die in vollständiger Weise alle Konfigurationen der Einheit der Rechner beschreibt, und in der zu jedem Zeitpunkt jeder der Rechner durch die Zusammensetzung der Einheit der Rechner die Kenntnis der Liste der Aufgaben, die er ausführen muss, aber auch der Liste der Aufgaben, die durch die anderen Rechner beherbergt werden müssen, hat, und dass die auf jedem Rechner (50) installierte Software umfasst:
- Mittel des "Managers der Verfügbarkeit" (52), die die Anwendungen in Abhängigkeit von den Elementen managen, die durch Mittel des "Überwachers der Gruppe" (54), Mittel des "Überwachers der Anwendungen" (55) und Mittel des "Managers des Kontexts" (57) erbracht werden,
- die statische Tabelle (53), die die Funktion jedes Rechners (50) definiert,
- die Mittel des "Überwachers der Gruppe" (54), die den Aufbau der Gruppe von Rechnern zu jedem Zeitpunkt beschreiben,
- die Mittel des "Überwachers der Anwendungen" (55), die den Zustand der Anwendungen (56) im Verlauf der Ausführung auf dem System überwachen,
- die Mittel des "Managers des Kontexts" (57), die den Kontext des Rechners managen, auf dem sie installiert sind, wobei der Manager des Kontexts zwei Funktionen aufweist:
- er beschreibt ein Protokoll von Spuren der Anwendungen, das die Informationen des Ablaufs und die Fehler jeder Anwendung umgruppiert, wobei die Änderungen von Strategien, die auf die Änderung der Einheit angewendet werden, eine Kontextdatei ergeben,
- er verteilt zu den anderen Rechnern die Dateien des Kontexts der Anwendungen angesichts einer eventuellen Verlagerung einer Aufgabe eines Rechners zu einem anderen bei einer Änderung der Zusammensetzung der Einheit von Rechnern aufgrund der Änderung der Strategie.

2. System nach Anspruch 1, in dem die Datei der Strategien Folgendes umfasst:
- einen ersten Teil, der die Blöcke von Anwendungen durch Zuordnen zu einem logischen Namen, eine Liste von ausführbaren Elementen, die einen zu erbringenden Dienst oder eine Gesamtheit von zu erbringenden Diensten darstellt, beschreibt,
- einen zweiten Teil, der sich damit befasst, jedem Rechner, der zu der Einheit gehören kann, den Namen einer verfügbaren Funktion zuzuordnen,
- einen dritten Teil, der es ermöglicht, einen Block von Anwendungen mit jeder der Funktionen, die die Rechner erfüllen können, zu verknüpfen.

3. System nach Anspruch 1, in dem der Überwacher der Gruppe zyklisch eine Nachricht aussendet, die den Namen und die Adresse des Rechners enthält, auf dem er ausgeführt wird.

4. System nach Anspruch 3, in dem der Überwacher der Gruppe zwei Funktionen erfüllt:
- er signalisiert zyklisch die Anwesenheit eines Rechners im Netz an die anderen Rechner,
- er bleibt beim Abhören des Netzes, um die Liste der Rechner der Einheit zu erstellen und zu unterhalten.

5. System nach Anspruch 1, in dem der Überwacher der Anwendungen zyklisch den Zustand der Anwendungen untersucht, die auf dem Rechner gestartet werden, und die Anomalien dem Manager der Verfügbarkeit signalisiert.

6. System nach Anspruch 1, in dem der Manager der Verfügbarkeit die Anwendungen gemäß den Sollwerten der Datei von Strategien startet, neustartet oder anhält und die Tabelle der Situation der Prozesse aktuell hält, die einem Kommunikationssystem zwischen Aufgaben ermöglicht, die Adresse jeder Anwendung zu kennen.

7. System nach Anspruch 1, in dem jeder Rechner ein UNIX-Rechner ist.

8. System nach Anspruch 7, das LINUX-Eingangs/Ausgangs-Gehäuse für Peripheriefunktionen umfasst.

9. Verfahren für bordgestützte Verarbeitungen von Tests, das ein Verarbeitungssystem mit einer Einheit von Rechnern einsetzt, die im Netz vorhanden und austauschbar sind (50), die mit einem Ethernet-Netz (51) verbunden sind, wobei eine identische Software auf jedem Rechner (50) installiert ist, **dadurch gekennzeichnet, dass** im Fall einer Störung eines Rechners die folgenden Schritte vorhanden sind:
- Detektion der Anomalie durch die Rechner, die immer betriebsfähig sind,
- automatische Umkonfiguration des Systems in Abhängigkeit von einer Strategie, die in einer Datei von Strategien (53) bestimmt ist, die auf jedem Rechner identisch ist, die in vollständiger Weise alle Konfigurationen der Einheit von Rechnern beschreibt, und in der zu jedem Zeitpunkt jeder der Rechner durch die Zusammensetzung der Einheit der Rechner die Kenntnis der Liste der Aufgaben, die er ausführen muss, aber auch der Liste der Aufgaben, die durch die anderen Rechner beherbergt werden müssen, hat,
- Aufrechterhalten der für den Test wesentlichen Funktionen,
und dass die auf jedem Rechner installierte Software umfasst:
- Mittel des "Managers der Verfügbarkeit" (52), die die Anwendungen in Abhängigkeit von den Elementen managen, die durch Mittel des "Überwachers der Gruppe" (54), Mittel des "Überwachers der Anwendungen" (55) und Mittel des "Managers des Kontexts" (57) erbracht werden,
- die statische Tabelle (53), die die Funktion jedes Rechners (20) definiert,
- die Mittel des "Überwachers der Gruppe" (54), die den Aufbau der Gruppe von Rechnern zu jedem Zeitpunkt beschreiben,
- die Mittel des "Überwachers der Anwendungen" (55), die den Zustand der Anwendungen (56) im Verlauf der Ausführung auf dem System überwachen,
- die Mittel des "Managers des Kontexts" (57), die den Kontext des Rechners managen, auf dem sie installiert sind, wobei der Manager des Kontexts zwei Funktionen hat:
- er beschreibt ein Protokoll von Spuren der Anwendungen, das die Informationen des Ablaufs und die Fehler jeder Anwendung umgruppiert, wobei die Änderungen von Strategien, die auf die Änderung der Einheit angewendet werden, eine Kontextdatei ergeben,
- er verteilt zu den anderen Rechnern die Dateien des Kontexts der Anwendungen angesichts einer eventuellen Verlagerung einer Aufgabe eines Rechners zu einem anderen bei der Änderung der Zusammensetzung der Einheit von Rechnern aufgrund der Änderung der Strategie.

## Claims

1. System for onboard processing of flight tests, which comprises a group of standard interchangeable computers (50) connected to an Ethernet network, identical software being installed on each computer, **characterised in that** each computer comprises means of monitoring the other computers in the group so that computers present on the network and the tasks being done on each computer are known at all times, said monitoring means using a static table "strategies file" (53) identical on each computer, that exhaustively describes all configurations of all computers in the group, and in which each computer knows the list of tasks that it is required to execute, and also the list of tasks to be done by the other computers, at all times, due to the composition of the computer group and in which the software installed on each computer comprises:
an availability manager means (52), that manages applications as a function of elements input by a group monitor means (54), an application monitor means (55) and a context manager means (57);
the static table (53), that defines operation of each computer (50);
the group monitor means (54), that keeps composition of the group of computers at all times;
the application monitor means (55), that monitors the state of applications being executed on the system; and
the context manager means (57), that manages context of the computer on which they are installed, the context manager performing two functions:
writing an applications trace log that contains execution information and errors from each application, strategy changes applied to changes in the group resulting in a context file; and
distributing application context files to other computers so that a task can be displaced from one computer to another when a change is made to the composition of the group of computers due to one of the strategy change.

2. System according to claim 1, in which the strategies file comprises:
a first part that defines blocks of applications by associating a logical name with a list of executables that represents a service or a set of services to be provided;
a second part that associates the name of an available function with each computer that might belong to the group; and
a third part that relates an applications block to each function that the computers might perform.

3. System according to claim 1, in which the group monitor cyclically sends a message containing the name and address of the computer on which it is running.

4. System according to claim 3, in which the group monitor performs two functions:
it cyclically signals the presence of a computer on the network to the other computers; and
it continues listening to the network so as to set up and maintain the list of computers in the group.

5. System according to claim 1, in which the applications monitor cyclically examines the state of applications running on the computer and signals any anomalies to the availability manager.

6. System according to claim 1, in which the availability manager starts, restarts or stops applications depending on instructions in the strategies file and continuously updates a process situation table that an inter-task communication system can use to determine the address of each application.

7. System according to claim 1, in which each computer is a UNIX computer.

8. System according to claim 7, which comprises LINUX input/output boxes for peripheral functions.

9. Onboard flight test processing method using a processing system comprising a set of standard interchangeable computers connected to an Ethernet network, an identical software being installed on each computer, **characterised in that** in case of a failure in one computer the method comprises the following steps:
executing, a plurality of flight test functions in the processing system, to monitor and log events associated with a flight test;
detecting the anomaly by computers that are still in operation;
automatically reconfiguring the system as a function of a strategy determined in a strategies file, identical on each computer, that exhaustively describes all configurations in a group of computers, and in which each computer knows the list of tasks that it is required to execute, and also the list of tasks to be done by the other computers, at all times, due to the composition of the computer group;
maintaining functions essential for the test;
in which the software installed on each computer comprises:
an availability manager means (52), that manages applications as a function of elements input by a group monitor means (54), an application monitor means (55) and a context manager means (57);
the static table (53), that defines operation of each computer (50);
the group monitor means (54), that keeps composition of the group of computers at all times;
the application monitor means (55), that monitors the state of applications being executed on the system; and
the context manager means (57), that manages context of the computer on which they are installed, the context manager performing two functions:
writing an applications trace log that contains execution information and errors from each application, strategy changes applied to changes in the group resulting in a context file; and
distributing application context files to other computers so that a task can be displaced from one computer to another when a change is made to the composition of the group of computers due to one of the strategy change.
